(19) Europäisches Patentamt / European Patent Office / Office européen des brevets

(11) **EP 4 095 583 A1**

(12) **EUROPEAN PATENT APPLICATION**

(43) Date of publication:
**30.11.2022 Bulletin 2022/48**

(21) Application number: **21175703.4**

(22) Date of filing: **25.05.2021**

(51) International Patent Classification (IPC):
**G02B 21/00** (2006.01)    **G01N 21/64** (2006.01)

(52) Cooperative Patent Classification (CPC):
**G01N 21/6458; G02B 21/0036; G02B 21/0076; G02B 21/008**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Abberior Instruments GmbH**
**37077 Göttingen (DE)**

(72) Inventor: **SCHMIDT, Roman**
**37077 Göttingen (DE)**

(54) **METHOD, DEVICE, MICROSCOPE AND COMPUTER PROGRAM FOR ESTIMATING A POSITION OF AN EMITTER IN A SAMPLE**

(57)    The invention relates to a method for estimating a position of an emitter (2) in a sample (1) comprising illuminating the sample (1) with light at one or more sets of probe positions ($P_i$), acquiring photons for the sets of probe positions ($P_i$), and determining vectors of photon counts or sums of photon counts for the sets of probe positions from the acquired photons, and-estimating the position of the emitter (2) from the vectors of photon counts or sums of photon counts, wherein the one or more sets of probe positions ($P_i$) each comprise six or more probe positions ($P_i$), which are arranged rotationally symmetric on a circle around a center, wherein the one or more sets of probe positions lacks a central probe position. The invention further relates to an apparatus (40) for implementing the method, a microscope (10) using the apparatus (40) and a computer program implementing the method.

FIG. 8

EP 4 095 583 A1

**Description**

**TECHNICAL AREA OF THE INVENTION**

The present invention is related to a method, a computer program, and an apparatus for estimating a position of an emitter in a sample. The invention is further related to a microscope, which makes use of such a method or apparatus.

**PRIOR ART**

Fluorescence microscopy has experienced a second resolution boost due to the synergistic combination of the specific strengths of the coordinate-targeted super-resolution family [1] represented by STED (STimulated Emission Depletion) [2] and RESOLFT (REversible Saturable OpticaL Fluorescence Transitions) [3] and its coordinate-stochastic counterpart comprising PALM (PhotoActivated Localization Microscopy) / STORM (STochastic Optical Reconstruction Microscopy) [4] and PAINT (Point Accumulation for Imaging in Nanoscale Topography) [5]. The resulting synergistic concept, called MINFLUX (MINimal photon FLUXes) [6], has closed the prevalent resolution gap from -20-30 nm in STED, PALM/STORM, and other fluorescence imaging and localization techniques to the 1-5 nm size scale of the molecules themselves.

At its core, MINFLUX localization is based on the important rationale of injecting a reference coordinate in the sample using a structured optical beam, such as a donut with a central intensity minimum, i.e., a zero. The position of the zero in the sample defines the targeted sample coordinate. The MINFLUX concept equally applies to entire sets of reference coordinates, i.e., line- and point-like zeros, and parallelized detection in the widefield. Coordinate targeting enables a well-controlled and therefore photon-efficient localization of fluorescent molecules, because the fluorophore coordinate to be determined is no longer found by establishing the center of a feeble, diffraction-limited fluorescence spot emerging on a camera. Instead, the fluorophore is localized by actively targeting the zero of the excitation donut to the fluorophore. Concretely, the excitation intensity zero is brought as closely as possible to the molecule in well thought-out iterations, until the detected fluorescence rate approximately matches that of the background noise. In this closest proximity, only a minimal number of fluorescence photons are needed to gain maximal localization precision, because establishing the remaining distance between the coordinate targeted by the donut zero and the molecular position requires much fewer detected photons. Thus, 'injecting' or targeting a reference coordinate in the sample shifts the burden of requiring many fluorescence photons for localization to the inexhaustible number of photons in the donut-shaped excitation beam.

Since MINFLUX localization is no longer limited by waiting for large numbers of fluorescence photons, this nanometer-precise localization is much faster than the camera-based localization used in PALM/STORM. The idea of optically injecting a coordinate using a donut zero is inherently also present in the original STED concept. For STED microscopy, it is evident that, in the absence of background, a single detected photon suffices to prove the presence of a fluorophore at the coordinate targeted by the donut zero. There as well, the emitting fluorophore is perfectly localized by the photons injected by the STED beam.

The minimum localization precision achievable with an unbiased estimator, i.e., the Cramer-Rao lower bound (CRLB) for localization of a fluorophore located within the region of diameter $L$ outlined by the targeted coordinate pattern, is given by $\sigma \geq L/\left(4\sqrt{N}\right)$, with $N$ denoting the sum of photons detected with the zero placed at the coordinates of the targeted coordinate pattern. While the dependence on the diameter $L$ of the targeted coordinate pattern is linear, the dependence on the number of detected photons $N$ merely follows the well-known inverse square-root relation. Therefore, bringing the zero of the excitation donut closer to the fluorophore position, i.e. a controlled reduction of the diameter $L$ of the targeted coordinate pattern, increases the localization precision more effectively than waiting for larger numbers $N$ of detected photons. This fundamental fact is at the heart of the iterative MINFLUX approach, which plays out the central idea of bringing the zero of the donut to spatial coincidence with the probed fluorophore, a procedure only limited by background noise. For the general case of a targeted coordinate pattern comprising a set of outer triangular plus central probing points, a successive zooming-in on the molecule with a stepwise-reduced $L_k$, with $L_k$ chosen to be three times $\sigma_{k-1}$, i.e., the uncertainty in the previous iteration, is a workable strategy for refining the position estimate. After small numbers $k$ of iterations, and therefore for a combined $N_t = k \cdot N$ of detected photons in the case of identical or similar photon counts per iteration, the CRLB becomes:

$$\sigma_k \geq \frac{L_k}{4\sqrt{N}} = \frac{3 \cdot \sigma_{k-1}}{4\sqrt{N}} = \frac{3 \cdot L_{k-1}}{\left(4\sqrt{N}\right)^2} = \cdots = \frac{3^{k-1}}{\left(4\sqrt{N}\right)^k} L_1 \propto k^{\frac{k}{2}} \frac{L_1}{N_t^{\frac{k}{2}}}. \qquad (1)$$

Already four steps, i.e., $k=4$, yield $\sigma_4 \propto 1/N_t^2$, i.e., an inverse quadratic as opposed to an inverse square-root dependence on the number of detected photons $N_t$. More iterations readily yield an even higher order, reflecting an exponential relationship. Crucially as well, the numbers of photons collected in each iteration need not be identical. Rather, they may be individually adjusted for their most efficient expenditure in the iterative procedure.

Sample optimization for MINFLUX measurements typically involves finding the right imaging conditions for the sample, e.g., laser powers or buffer composition, which is usually done by successive measurements with adjusted parameters. To facilitate this routine and generally improve sample throughput, instant rendering of final localization data during a measurement is highly desirable, as it allows to judge the quality of the sample already shortly after the measurement has begun.

One possible modality for superresolving imaging makes use of iterative MINFLUX imaging with power ramping. This approach derives the position of an emitter in a sample from the photon counts measured at a set of probe positions by applying a stochastic estimator to the data. The approach is complicated by the fact that in order to arrive at an unbiased result, i.e., a result without a systematic error, specific experimental conditions must be considered, such as the spatial intensity distribution of the donut and in particular the signal-to-noise ratio. So far, these conditions have been taken into account by time-consuming post-processing of the localization data [6], [7], [8].

According to the protocol disclosed in the original 2D MINFLUX publication [6], the sample is probed in each step at four locations, one at a central position which coincides with the position estimate of the emitter determined in the previous step, and three positions arranged as an equilateral triangle around the center. While three positions represent the minimal set necessary to obtain positional information about the emitter in two dimensions, adding the central position is described as helping to remove ambiguities in the position estimation.

Furthermore, in a 3D MINFLUX procedure described in the prior art [7], the emitter is first laterally pre-localized in the focal plane by excitation with a Gaussian excitation focus at four points around an initial position estimate of the emitter. An axial pre-localization is then performed with an excitation light distribution with a local minimum (3D donut) at two points below and above the estimated position. Subsequently, the 3D donut is placed at seven positions, and fluorescence photon counts are obtained. The pattern of seven positions of the 3D donut center contains five positions oriented in the focal plane: one central position coinciding with the expected emitter position and four equally spaced peripheral points. Two additional positions are arranged above and below the focus along the z axis.

Patent applications DE 10 2016 119 263 A1 and DE 10 2016 119 264 A1 disclose variants of the MINFLUX method aiming at high precision localization at minimized photon numbers by using a minimum number of excitation donut positions per localization step. DE 10 2016 119 264 A1 specifically discloses essentially simultaneously illuminating a sample with a donut-shaped excitation beam at three positions on an equilateral triangle around the estimated emitter position.

WO 2020/128106 A1 discloses a MINFLUX microscope comprising a plurality of single light sources (e.g., based on fiber optics) configured to generate an illumination point pattern in the sample. Specifically, cartesian and hexagonal patterns are described, wherein, according to an example, the illumination points may be arranged at the corners of a triangle or square.

However, the above-discussed sets of targeted coordinate patterns of the excitation light minimum and the corresponding position estimators described in the prior art are prone to problems if high levels of background emission or fluctuating background emission occurs. Using the methods according to the prior art, background correction requires numerically optimized parameters for each signal-to-background ratio. However, the exact signal-to-background ratio is often unknown or subject to fluctuations. Furthermore, when using the targeted coordinate patterns of the prior art, measuring conditions are still quite asymmetric in the sense that the uncertainty of the position estimation is highly dependent on the exact actual position of the emitter.

## PROBLEM

It is an object of the present invention to provide a method for estimating a position of an emitter in a sample which is improved in view of the disadvantages of the prior art, particularly allowing a position estimation with reduced bias in view of background correction and independence of the uncertainty of the results on the actual emitter position.

## SOLUTION

This objective is attained by the subject matter of the independent claims 1 (method), 13 (apparatus), 14 (microscope) and 15 (computer program). Advantageous embodiments of the invention are specified in sub claims 2 to 12 and described hereafter.

## DESCRIPTION OF THE INVENTION

A first aspect of the invention relates to a method, particularly for adapting an estimator for use in a microscope, for estimating a position of an emitter (e.g., a fluorophore) in a sample comprising illuminating the sample with light, particularly excitation light, at one or more sets of probe positions, acquiring photons, particularly fluorescence photons or photons from reflected light, for the sets of probe positions, determining vectors of photon counts or sums of photon counts for the sets of probe positions from the acquired photons, and estimating the position of the emitter from the vectors of photon counts or sums of photon counts, wherein the one or more sets of probe positions each comprise six or more probe positions, which are arranged rotationally symmetric on a circle around a center, wherein the one or more sets of probe positions lacks a central probe position at the center of the circle.

The aim of the measurements is to infer the position of the emitter, particularly the fluorophore, from the set of measurement data for a set of probe positions.

In the context of the present specification, the term 'emitter' designates a molecule, molecular complex or a particle configured to emit light in response to being illuminated by light, particularly excitation light. In case of the emitter being a particle, the emitter particularly comprises a size which is equal to wavelength of the light or smaller, such that the emitter can be treated as a point light source. For example, the emitted light may be fluorescence light, reflected light or scattered light. Examples of emitters in the sense of the present specification are fluorophores, quantum beads or gold nanoparticles.

In the context of the present specification, a vector of a photon count represents the spatial coordinates of a probe position corresponding to a photon count obtained while the sample is illuminated by the light at the respective probe position.

Any reasonable estimator basically determines a center of gravity of the measured values. This center of gravity does not change if a fixed value is added to all the measurements. However, the center of gravity is determined from a vector sum of the individual measured values. This vector sum must be normalized in the noise-free case with respect to the sum of the measured values.

If background noise is now added, the expectancy value of the vector sum in the enumerator does not change, but the expectancy value of the sum increases by the expectancy value of the background noise that is recorded for the probe positions during the total measurement time. In order make the expectancy value of the position estimate independent of the background noise, the expectancy value of the background noise may hence be subtracted in the denominator. In this manner, a pattern comprising probe positions (also referred to herein as 'targeted coordinate pattern', TCP, or 'set of targeted coordinates', STC), which are arranged rotationally symmetric on a circle without a central position, facilitates a bias-free subtraction of background independently of the current signal-to-noise ratio, which influences background correction according to the methods of the prior art.

In the state of the art, a pattern is preferably used for estimation, which also has a probe position in the center. This is done since from a theoretical point of view, the information content of photons increases the closer the emitter is located to the minimum of the excitation light distribution. Furthermore, in case the emitter is located at the periphery of the TCP, a measurement at the TCP center reduces the ambiguity of the position estimation. Such an estimation with a probe position at the center leads to a change in the expectancy value when background noise is added.

However, with a prior art estimator it is not possible to simply subtract the background noise. In the case of an estimator with a probe position in the center, at least the value measured for this center position would have to be corrected with respect to the background noise in order to eliminate the background noise. Unfortunately, in the center the least photons of the signal are expected, i.e., the relation between signal and background is extremely unfavorable. If the emitter were exactly in the center, the signal would actually be zero. If the average noise were now subtracted from zero, negative values would be obtained. This would cause severe problems. Setting the signal in the center to zero, if otherwise negative, is likewise not possible. Therefore, in the state-of-the-art optimum coefficients of correction functions are determined for each ratio of signal and background, whereas the measured photon counts as such are not corrected. In other words, a correction function needs to be determined in a complicated manner (for details see [9]), which has the ratio of signal and background as a parameter.

Using the solution according to the present invention, background can be determined in real-time and taken into account in the real-time position estimation. For this purpose, in particular, the average signal value reduced by the background estimated in real-time is determined, i.e., the correspondingly corrected sum of the individual measured values.

A pattern of six symmetrically spaced probe positions without a central position reduces the dependency of the uncertainty of the position estimation on the exact actual position of the emitter, and therefore improves the robustness of the position estimation.

According to the teachings of the prior art, it would be counter-intuitive to increase the number of probe positions per iteration, since this brings about a significant disadvantage in view of measurement speed and photon exposure of the sample. Likewise, omitting the central probe position of the TCP is counter-intuitive, since this may lead to less efficient use of photon information and additional ambiguity in the position estimation.

However, the inventors have surprisingly found that the above-described improvement in robustness outweighs these disadvantages in many situations.

The six or more probe positions are arranged on a circle, wherein particularly the six or more probe positions are arranged in a focal plane perpendicular to an optical axis along which the sample is illuminated by the light, particularly the excitation light. In this manner, the position of the emitter may be determined in two dimensions, e.g., in a 2D MINFLUX procedure. In particular, to obtain positional information in three dimensions, the sample can additionally be illuminated with the light at further probe positions arranged outside of the focal plane, e.g., above and below the previously determined position estimate of the emitter. Thereby, e.g., a 3D MINFLUX method may be implemented.

The set of probe positions does not use a central probe position, but only probe positions that are arranged rotationally symmetric around the center. In other words, each probe position can be mapped to a different probe position by rotating it around the center. Of course, this does not exclude the possibility that additional probe positions may be measured, in which case the resulting information is used additionally. For example, an additional measurement can be made in the center to check the plausibility of the measurement, particularly for verifying the estimation of the background emission. Furthermore, in particular, a ratio between the sum of the photon counts at the probe positions on the circle and the photon count at the center may be obtained, more particular in a weighted manner with respect to dwell times at the individual probe positions. If such a ratio reaches a pre-determined threshold (which may be dependent on the diameter of the TCP), e.g., the position estimation may be aborted or interrupted, or the current iteration of the process may be repeated.

The sample may be illuminated at the probe positions sequentially, in a stepwise manner, or in a continuous circular movement over the probe positions. In the latter case, the photon counts acquired during scanning over a section of the circle may be allocated to a characteristic point of the respective section, e.g., a center of the respective section.

In certain embodiments, the sample is illuminated at the probe positions with a light distribution, particularly an excitation light distribution having an intensity increase range adjacent to a minimum. This minimum, i.e., the point or points in space having a minimum light intensity, may be a local minimum or a global minimum. The minimum may be flanked by local or global maxima of the light intensity in some or all directions in space. The light distribution may comprise a single minimum, such as, e.g., a 2D donut or 3D donut (e.g., a bottle beam).

In certain embodiments, opposing probe positions of a set of probe positions are illuminated in sequential pairs. This approach further supports the prevention of a directional distortion that would occur if a short burst of background would concentrate into a subset of the probe positions. Each pair of probe positions together with the center of the set of probe positions defines an angle, where the probe positions are located on the legs and the center is located on the vertex. For an even number of probe positions, opposing probe positions are those where the angle is 180°. For an odd number of probe positions, opposing probe positions are those where the angle is closest to 180°.

In certain embodiments, a plurality of scanning iterations is performed, wherein in each scanning iteration the sample is illuminated with light at the one or more sets of probe positions, photons, particularly fluorescence photons, are acquired for the sets of probe positions, vectors of photon counts or sums of photon counts are determined for the sets of probe positions from the acquired photons, and a position estimate of the emitter is determined from the vectors of photon counts or sums of photon counts.

In certain embodiments, the method comprises a localization sequence in which the position of the emitter is estimated, wherein the localization sequence comprises a plurality of the scanning iterations. In particular, in each scanning iteration, the center of the circle (center of the set of targeted coordinates) is positioned at the position estimate of the emitter obtained in the previous scanning iteration.

In certain embodiments, the circle, on which the probe positions are arranged rotationally symmetric around the center, comprises a diameter. In certain embodiments, the localization sequence comprises a first scanning iteration, wherein particularly the diameter is 65% to 95%, particularly about 80%, of a full-width-at-half-maximum of the light distribution illuminating the sample (e.g., the excitation donut). Therein, the term 'full-width-at-half-maximum' denotes the distance between the inner shoulders (intensity increase ranges) of the light distribution flanking the minimum at 50% of the maximum intensity of the light distribution. For instance, a 2D-donut-shaped light distribution having a wavelength of 642 nm has a full-width-at-half-maximum of about 360 nm according to this definition. This range of diameters increases the probability that the emitter being localized is actually located within the circle.

In certain embodiments, in each scanning iteration after the first scanning iteration, the diameter of the circle is reduced by a factor of 1,5 to 2,5 with respect to the previous scanning iteration.

In certain embodiments, the localization sequence comprises a second scanning iteration, wherein particularly the diameter is 30% to 50%, particularly about 40%, of the full-width-at-half-maximum of the light distribution in the second scanning iteration.

In certain embodiments, the localization sequence comprises a third scanning iteration, wherein particularly the diameter is 15% to 25%, particularly about 20%, of the full-width-at-half-maximum of the light distribution in the third scanning iteration.

In certain embodiments, the localization sequence comprises a final scanning iteration, wherein particularly the diameter is 5% to 15%, particularly about 10%, of the full-width-at-half-maximum of the light distribution in the final scanning iteration.

In certain embodiments, for each of the scanning iterations, a subsequent scanning iteration is initiated in case the acquired photons exceed a photon count limit, wherein particularly the photon count limit is specific to each scanning iteration. In certain embodiments, the photon count limit is reduced, particularly by a factor of 1,5 to 2,5, more particularly 2, between the first scanning iteration and the second scanning iteration. In certain embodiments, the photon count limit remains constant between the second scanning iteration and the third scanning iteration. In certain embodiments, the photon count limit is increased, particularly by a factor of 3 to 5 before the final scanning iteration.

In certain embodiments, the photon count limit is between 1 and 1000 photons, particularly 20 and 500 photons, above background emission in each scanning iteration. The selected photon count limit in each step is particularly dependent on the type of emitter used and the conditions in the sample. By adjusting the photon count limit, a balance between localization accuracy, speed and efficiency (percentage of detected emitters to those present in the sample) can be achieved. E.g., a higher accuracy can be achieved by accumulating more photons, but the probability of losing a fluorophore is also increased.

In certain embodiments, a power of the light, particularly the excitation light, is increased, particularly by a factor of 1,5 to 2,5, more particularly 2, between the first scanning iteration and the second scanning iteration and/or between the second scanning iteration and the third scanning iteration. In certain embodiments, the power is increased by a factor of 1,1 to 1,6 before the final scanning iteration.

In certain embodiments, the method comprises a pre-localization step, particularly performed prior to the localization sequence to search for an emitter in a field of view and/or obtain an initial position estimate of the emitter. The center of the circle (center of the set of targeted coordinates) is positioned at the initial position estimate in the first scanning iteration of the localization sequence. In particular, the pre-localization step comprises one or more scanning iterations. The pre-localization step may be implemented in various ways, e.g., by pinhole orbit scanning (see below), detecting the light distribution of the emitted light using an array detector, camera imaging (e.g., PALM/STORM microscopy), confocal scanning with a Gaussian shaped excitation beam or MINFLUX (particularly using special parameters optimized for pre-localization).

In certain embodiments, the diameter of the circle remains constant during the pre-localization step. In certain embodiments, the diameter of the circle is the same as the in the first scanning iteration of the localization sequence.

In certain embodiments, the diameter of the circle is 65% to 95%, particularly about 80%, of the full-width-at-half-maximum of the light distribution during the pre-localization step.

In certain embodiments, the sample is illuminated with a stationary donut-shaped excitation beam, an image of the (detector) pinhole is projected sequentially to the probe positions in the focal plane, the photons, particularly fluorescence photons, are acquired for the probe positions, and the position of the emitter in the sample is estimated from the acquired photons in the pre-localization step, particularly in the at least one scanning iteration of the pre-localization step. In particular, the center of the pinhole is projected to the probe positions on the circle.

In certain embodiments, each of the scanning iterations, particularly of the localization sequence and/or of the pre-localization step, comprises a dwell time of 500 µs to 2 ms, particularly about 1 ms.

In certain embodiments, an additional measurement is performed, wherein the sample is illuminated with light at an additional probe position at the center of the circle (forming the set of targeted coordinates), and photons, particularly fluorescence photons, are acquired. In particular, a center-frequency-ratio (CFR) is determined from the photons acquired from the one or more set of probe positions and the additional probe position obtained in the additional measurement. Importantly, the photon count acquired at the additional probe position is not used to localize the emitter, but only serves as a control measurement as described below.

The center-frequency-ratio is a ratio between a sum of the photon counts acquired at the probe positions on the circle (forming the STC) and the photon count acquired at the additional probe position, weighted by the dwell times during which the respective probe positions have been illuminated. In particular, the CFR is determined according to

$$\mathrm{CFR}(p_j) := \frac{p_0 \cdot \sum_{j=1}^{m} t_j}{t_0 \cdot \sum_{j=1}^{m} p_j},$$

the formula wherein $p_0$ denotes the photon count at the additional probe position, $t_0$ denotes the dwell time at the additional probe position, $p_j$ denote the individual photon counts at the probe positions of the STC (on the circle around the center), and $t_j$ denote the respective dwell times.

A center-frequency-ratio above a certain threshold (the threshold being, e.g., between 0,2 and 0,8) indicates the presence of background emission above an acceptable level.

In certain embodiments, the method is aborted if the CFR is above a threshold (e.g., 0,8 or 0,5). In certain embodiments, the threshold is adjusted to a specific value in each scanning iteration. In certain embodiments, in case the CFR is above the threshold in a scanning iteration, the respective scanning iteration is repeated and the CFR is re-determined. In particular, the method is aborted if the CFR is above the threshold after a number of repetitions of the scanning iteration indicated by a 'stickiness parameter'. E.g., if the stickiness parameter is equal to 2, a scanning iteration is repeated twice if the CFR is above the threshold. If the CFR is again above the threshold in the two repetitions of the scanning iteration, the localization procedure is aborted. If the CRF is below the threshold in any of the repetitions, the measurement is continued.

A stickiness parameter of 2 or more advantageously avoids abortion of transient bursts of background emission in some cases by providing an additional check of the CFR.

In certain embodiments, the CFR is not determined in the final scanning iteration.

In certain embodiments, at least a first subset of the scanning iterations is repeated after the final scanning iteration (i.e., after the final position estimation of the iteration sequence) to determine a new position estimate of the emitter. In this manner, several localizations can be obtained, and these localizations can be compared and statistically analyzed, e.g., to determine the accuracy of the localization or as an additional plausibility check. In particular, only a part of the scanning iterations is repeated after the final scanning iteration. More particularly, a first subset consisting of the last n scanning iterations of the sequence of scanning iterations is repeated, wherein n is given by the absolute value of a 'headstart parameter'. For instance, in case the headstart parameter is set to -2, the last two scanning iterations (where the diameter of the circle defining the STC is smallest) are repeated after a final localization of the emitter has been obtained.

Repeating only the last few iterations is advantageous because the position of the emitter is already known with high probability from the first localization sequence. In the repetitions, the deviation of the position estimation is expected to be relatively small, such that there is no benefit of starting the localization again with an STC of a larger diameter.

In certain embodiments, repeating the first subset of scanning iterations is continued until the emitter reaches a dark state (e.g., is bleached).

In certain embodiments, the CFR is determined (and compared to the threshold to determine if the scanning iteration is to be repeated or the measurement is to be aborted) only in a second subset of the scanning iterations, particularly in every $m^{th}$ scanning iteration, where m is a natural number equal to or larger than 2.

In certain embodiments, the headstart parameter is chosen such that the repeated first subset of scanning iterations includes at least one scanning iteration, in which the CFR is determined (and compared to the threshold as described above). For example, if the CFR is determined in every second scanning iteration ($m$=2), and the CFR is not determined in the final scanning iteration, the headstart parameter may be set to -2, such that the second-to-last scanning iteration and the last scanning iteration are repeated to obtain a further localization of the emitter.

In particular, by varying the stickiness and/or headstart parameters, an adaptive sequence of scanning iterations can be achieved, where the actual measurement steps are not pre-determined, but may evolve differently for each localization procedure, e.g., dependent on the actual emitter position and the background emission encountered during the measurement.

In certain embodiments, the method further comprises determining a value representative of background noise from the vectors of photon counts or the sums of photon counts. In particular, value is determined in a plurality of the scanning iterations, more particularly in each of the scanning iterations.

In certain embodiments, the method further comprises adapting an estimator in real-time using the value representative of background noise. In particular, adapting the estimator comprises subtracting a measured background from the vectors of photon counts or sums of photon counts in real time. More particularly, adapting the estimator further comprises obtaining a correction term, particularly a correction polynomial, and correcting the estimator in real time using the correction term. The correction term may be determined in real time using current parameters (e.g., TCP diameter, excitation light intensity), or may be pre-determined for the current set of parameters. In particular, the estimator is adapted in a plurality of the scanning iterations, more particularly in each of the scanning iterations.

Alternatively, the estimator may be adapted using a predetermined constant expressing an average background noise of the emitter. This is especially advantageous if the expected detection rates can be easily determined, such as, e.g., in case of light reflection on gold particles.

This accelerates the convergence of position estimation over several iterations without having to estimate background.

In certain embodiments, for determining a value representative of background noise only sets of probe positions are evaluated, for which no photons, particularly no fluorescence, from an emitter are detected. In other words, the value representing background noise is determined from sets of probe positions, for which no photons from emitters in a scanning area defined by the respective set of probe positions are detected. Of course, background light may also be produced by emitters outside of the scanning area, especially from out-of-focus locations. The scanning area may be defined as the area inside of the circle formed by the probe positions or may be somewhat larger, e.g., defined as a circle formed by the outermost intensity maxima of the six or more probe positions. This approach has the advantage that the estimation of background noise is not distorted by photons that actually stem from fluorescence from an emitter.

In this way, a more accurate background estimation is achieved.

In certain embodiments, for determining whether photons, particularly fluorescence, from an emitter, particularly within the scanning area, is detected, the sum of photon counts for a set of probe positions is compared with a threshold derived from a current estimated background. For example, the threshold may be a sum of the current estimated background and a preset threshold or a product of the current estimated background and a preset constant larger than 1. In this way, the sum of photon counts for a set of probe positions is only classified as a signal in case the sum deviates significantly from the current estimated background. The current estimated background may also be computed as a sliding average of background estimates from previous probe positions.

In certain embodiments, the sums of photon counts are added to a histogram. Using histograms, e.g., running histograms that are built from a limited number of entries in a first-in-first-out manner, has the advantage that a history of measurements can be evaluated in an easy way.

In certain embodiments, the histogram is specific for each of the plurality of scanning iterations. In an iterative MINFLUX approach, the size of the set of probe positions is particularly reduced for successive iterations. At the same time, the intensity is particularly increased, as the emitter, particularly the fluorophore, now is located closer to the minimum of the light distribution, particularly the excitation donut. In each iteration, various parameters (e.g., the TCP diameter and the excitation light intensity) influence the background noise. Therefore, it is advantageous to empirically determine a value representative of the background noise for each intensity that is used.

In certain embodiments, the value representative of background noise is derived from a peak of the histogram. Deriving the value representative of background noise from a peak of a histogram can be easily implemented. For example, the absolute maximum of a histogram can be used, which is a computationally inexpensive choice. Alternatively, peak-detection algorithms may be applied. For example, the value representative of background noise may be derived as the highest peak or as the first peak from a copy of the histogram after smoothing it with a Gaussian kernel. As an alternative, the value may be derived from the position of the peak that contains the most entries in total.

In certain embodiments, the estimator is adapted in such a way that an expectancy value of the background noise is subtracted from photon counts before estimating the position of the emitter. Typical estimators deliver an expectancy value for the position of an emitter. This expectancy value may be influenced by background noise. By subtracting an expectancy value of the background noise from photon counts before estimating the position of the emitter, a more reliable expectancy value for the position of the emitter is obtained. In particular, the expectancy value of the background noise is subtracted from the photon counts in a plurality of the scanning iterations, more particularly in each of the scanning iterations.

In certain embodiments, the estimator uses a calibration polynomial, wherein particularly the calibration polynomial is specific for each of a plurality of scanning iterations. According to the method of the invention, only a single calibration polynomial is needed for each pattern of probe positions, independently of the current background or signal-to-background ratio. In particular, the calibration polynomial is a function of the radial distance from the center of the pattern of probe positions (TCP). In particular, the calibration polynomial is specific for each of the plurality of scanning iterations.

For example, a calibration polynomial of second degree may be used. Using a calibration polynomial has the advantage that a calibration polynomial is inexpensive to compute on the microscope hardware. Optimized parameters for the polynomial may be obtained, for example, by a Monte Carlo simulation that accounts for the known experimental parameters. The calibration polynomial may likewise be provided as a look-up table.

In certain embodiments, the estimator, $\vec{r}(p_j)$, is determined by a product $\vec{r}(p_j) = c \cdot \vec{u}(p_j, \vec{b}_j)$ of a vector sum

$$\vec{u}\left(p_j, \vec{b}_j\right) = \frac{\sum_{j=1}^{m} p_j \cdot \vec{b}_j}{\sum_{j=1}^{m} p_j}$$

and a scaling constant or calibration polynomial, $c$, wherein $\vec{b}_j$ ($j = 1 \ldots m$) are the probe positions and $p_j$ are the associated acquired photons, wherein particularly the scaling constant, $c$, depends on a radius, $L$, of the circle, on which the probe positions are arranged, and the scaling constant, $c$, depends on a full-width-half-maximum of a detection point spread function.

In certain embodiments, the sets of probe positions are illuminated multiple times. This ensures that a time-fluctuating background signal is effectively probed at all probe positions, to mitigate a directional distortion that would occur if a short burst of background would concentrate into a subset of the probe positions.

In certain embodiments, in a post-processing step after the real-time localization of the emitter, the position estimation may be refined using a further estimator, e.g., a least-mean-squared estimator. Least-mean-squared estimators are very robust against background noise and are well suited for use in MINFLUX localization. Of course, also other types of estimators may be used, e.g., maximum likelihood estimator or other estimators known to the skilled person.

In certain embodiments, the method, particularly the pre-localization step, comprises illuminating the sample with a stationary donut-shaped excitation beam, projecting an image of a pinhole sequentially to said probe positions in the focal plane, acquiring the photons for the probe positions, and estimating a position of the emitter in the sample from the acquired photons.

According to this embodiment (also referred to herein as 'pinhole orbit scanning'), the probe positions refer to the position of the center of the pinhole projection in the focal plane in the sample, which deviates from the position of the minimum of the stationary donut-shaped excitation beam.

The described solution has the advantage that it improves the efficiency of the search process. Contrary to previous MINFLUX implementations, this pre-localization does not resort to a regularly focused beam. This significantly simplifies the setup, as it makes dedicated hardware for microsecond-scale switching between different focal intensity distributions, e.g., between a Gaussian shape and a donut shape, redundant. The spatial light modulators that are typically used for switching between a Gaussian shape and a donut shape are usually too slow to switch between the shapes during a measurement routine. While the catch range depends on several parameters, the donut shape facilitates the catch range to be extended beyond that of a Gaussian shape.

In certain embodiments, the excitation beam is kept stationary using a first scanning device and a second scanning device, particularly galvanometric and electro-optical scanners, that act in concert. This has the advantage that a rather large field of view is achieved.

In certain embodiments, a mutual distance between scanning positions is between 10% and 50% of an excitation wavelength that is used. This prevents dark spots next to positions of a search grid that potentially arise from the donut zero.

According to a second aspect of the invention, which may be realized as an embodiment of the first aspect or independently of the first aspect, the sample is illuminated by a light distribution, particularly a 3D excitation donut, at the one or more sets of probe positions, wherein the method comprises an axial localization step and a lateral localization step, and wherein

- in the axial localization step, a central local minimum of the light distribution, particularly the 3D excitation donut, is sequentially positioned at two axial probe positions on a scanning pattern axis running through an estimated position of the emitter (particularly an excitable fluorophore), wherein the pair of probe positions encloses the estimated position, wherein in the axial localization step emitted photons, particularly fluorescence photons, are acquired from the emitter for each of the axial probe positions, particularly wherein the measured value is allocated to the respective axial probe position, and wherein in the axial localization step, a new estimation of the axial position of the emitter is determined from the acquired photons, particularly from the measured values allocated to the respective axial probe positions, and wherein

- in the lateral localization step, the central local minimum of the light distribution, particularly the 3D excitation donut, is sequentially placed exclusively in a scanning pattern plane at six or more lateral probe positions, which are arranged rotationally symmetric on a circle around a center, wherein the lateral probe positions lack a central probe position at the center, wherein the scanning pattern plane is oriented perpendicular to the scanning pattern axis, and wherein the lateral probe positions are arranged around an estimated position of the emitter determined in one or more previous steps, wherein in the lateral localization step emitted photons, particularly fluorescence photons, are acquired from the emitter for each of the lateral probe positions, particularly wherein the measured value is allocated to the respective lateral probe position, and wherein in the lateral localization step, a new estimation of the lateral position of the emitter is determined from the acquired photons, particularly from the measured values allocated to the respective lateral probe positions.

As used herein, the term '3D excitation donut' describes an excitation light distribution comprising a local minimum which is surrounded by intensity increase areas in all three directions in space.

In certain embodiments, the lateral probe positions are chosen such that they are evenly spaced on the circle around the estimated position of the emitter. Choosing six such lateral probe positions is advantageous, since very symmetric measuring conditions are obtained in this manner, which results in the uncertainty of the position estimation being dependent only to a small extent on the exact actual position of the emitter.

In certain embodiments, the displacement of the excitation light in the axial direction is achieved by directing excitation light via a deformable mirror through an objective into the sample, wherein the axial positioning is achieved by a change of the shape of the deformable mirror. The deformable mirror is particularly arranged in a back aperture of the objective or in a plane which is conjugated to the back aperture, that is in a plane, in which a pupil of the objective may be formed.

The position can be determined from the respective measured values in a particularly simple manner by evaluating a vector sum. That means that the new estimation of the axial position or the new estimation of the lateral position of the emitter is obtained by evaluating a vector sum or that the axial coordinate of the estimated position during the axial pre-localization or that the axial localization is obtained by evaluating a vector sum.

$$\vec{u}(p_j, \vec{b}_j) = \frac{\sum_{j=1}^{m} p_j \cdot \vec{b}_j}{\sum_{j=1}^{m} p_j},$$

In particular, the vector sum has the form                                                      wherein $p_j$ indicates photon counts or intensities, which have been detected at positions $\vec{b}_j$ of the 3D excitation donut or the focused excitation light.

According to a simple calculation of this vector sum, a particular value is obtained for predefined scanning patterns exactly for a respective actual position of an emitter within a certain area of positions, in case the influence of noise is neglected and if there is no background signal, that means exactly one position is allocated to a calculated value. Therefore, it is respectively possible to correct the vector sum according to a predefined calibration function to obtain the new estimation of the axial position or the new estimation of the lateral position. The respective calibration function can be determined from a simulation.

A background signal, for instance background fluorescence, scattered surrounding light or light which is diffracted or reflected within the microscope does not affect the term in the numerator of the vector sum on average, but does affect the denominator. That means that the value of the vector sum $\vec{u}(p_j, \vec{b}_j)$ in the above-mentioned form is systematically dependent on the amount of background signal. Therefore, in particular, the amount of background signal is taken into account during the evaluation of the vector sum. This may happen in a particularly simple manner by subtracting the value of the background signal in the denominator of the above formula. Also for this reason, the amount of background signal is particularly determined in a sliding manner from measuring data.

In certain embodiments, the CFR is determined (and compared to the threshold as described above) in at least one lateral localization step, but not in the at least one axial localization step.

A third aspect of the invention which may be combined with any embodiment of the first and/or second aspect or may be realized independently of the first and second aspect relates to a method for estimating a position of an emitter in a sample comprising performing a plurality of scanning iterations, wherein in each scanning iteration a sample is illuminated with light at one or more sets of probe positions forming a pattern, particularly a pattern arranged on a circle, a sphere or an ellipsoid, photons, particularly fluorescence photons, are acquired for the sets of probe positions, particularly vectors of photon counts or sums of photon counts are determined for the sets of probe positions from the acquired photons, and a position estimate of the emitter is determined from the photon counts, wherein the sample is illuminated with light at an additional probe position at a center of the pattern, particularly a center or the circle, sphere or ellipsoid, and photons are acquired, wherein a center-frequency-ratio is determined from the photons acquired from the one or more set of probe positions and the additional probe position, and wherein in case the center-frequency-ratio is above a threshold in a scanning iteration, the measurement is aborted or the respective scanning iteration is repeated and the center-frequency-ratio is re-determined, wherein a first subset consisting of the last $n$ scanning iterations is repeated, wherein $n$ is given by the absolute value of a headstart parameter, wherein the center-frequency-ratio is determined only in a second subset of the scanning iterations, and wherein the headstart parameter is chosen such that the repeated second subset of the scanning iterations includes at least one scanning iteration, in which the center-frequency-ratio is determined.

A fourth aspect of the invention relates to an apparatus, particularly for adapting an estimator for use in a microscope, for estimating a position of an emitter in a sample, particularly by the method according to the first aspect and/or the second aspect of the invention, the apparatus comprising

- illumination means configured to illuminate the sample at one or more sets of probe positions, particularly with a light distribution having an intensity increase range adjacent to a minimum, wherein the one or more sets of probe positions each comprise six or more probe positions, which are arranged rotationally symmetric on a circle around a center, wherein the one or more sets of probe positions lacks a central probe position at the center;

- acquisition means configured to acquire photons, particularly fluorescence photons, for the sets of probe positions;

- processing means configured to determine vectors of photon counts or sums of photon counts for the sets of probe positions from the acquired photons, wherein particularly the processing means are configured to determine a value representative of background noise from the vectors of photon counts or the sums of photon counts; and

- optionally control means configured to adapt the estimator in real-time using the value representative of background noise.

In certain embodiments, the illumination means are configured to illuminate the sample with a stationary donut-shaped excitation beam.

In certain embodiments, the apparatus comprises projections means configured to project an image of a pinhole sequentially to the probe positions in the focal plane.

In certain embodiments, the apparatus comprises a deformable mirror configured to displace excitation light in an axial direction.

A fifth aspect of the invention relates to a microscope, characterized in that the microscope comprises an apparatus according to the third aspect and/or is configured to perform a method according to the first and/or second aspect.

A sixth aspect of the invention relates to a computer program comprising instructions, which, when executed by a computer, cause the apparatus according to the third aspect or the microscope according to the fourth aspect to perform a method according to the first and/or second aspect.

The term computer has to be understood broadly. In particular, it also includes embedded devices, workstations, parallel computation means, such as field-programmable gate arrays (FPGA), and processor-based data processing devices.

The computer program code can, for example, be made available for electronic retrieval or stored on a computer-readable storage medium.

Further embodiments of the apparatus according to the third aspect, the microscope according to the fourth aspect and the computer program according to the fifth aspect have already been mentioned in connection with the method according to the first and/or second aspect.

Further embodiments of the invention may be derived from the claims, the description and the drawings. Therein, the claims are not to be construed in a manner such that only subjects, devices or methods respectively comprising all or none of the features of a sub claim in addition to the features of the independent claims and aspects described herein, may be possible embodiments of the invention. In contrast, further embodiments may be drawn from features stated in the description or derivable from the drawings which may be singly or cumulatively applied.

## SHORT DESCRIPTION OF FIGURES

The invention is further elucidated and described hereafter with reference to the exemplary embodiments displayed in the figures. These embodiments are non-restrictive examples which are not meant to limit the scope of the invention.

**Fig. 1**    schematically illustrates a method for adapting an estimator for use in a microscope for estimating a position of an emitter in a sample;

**Fig. 2**    schematically illustrates a first embodiment of an apparatus for adapting an estimator for use in a microscope for estimating a position of an emitter in a sample;

**Fig. 3**    schematically illustrates a second embodiment of an apparatus for adapting an estimator for use in a microscope for estimating a position of an emitter in a sample;

**Fig. 4**    shows a sample with a number of molecules;

**Fig. 5**    shows an exemplary intensity curve over a cross-section through a light distribution;

**Fig. 6**    shows an exemplary optical setup of a MINFLUX microscope;

**Fig. 7**    illustrates the principle of real-time background compensation;

**Fig. 8**    illustrates the principle of MINFLUX localization;

**Fig. 9**    shows targeted coordinate patterns applied in the MINFLUX localization process, with simulated mean position estimates and confidence intervals; and

**Fig. 10**    shows a MINFLUX localization in three dimensions according to an embodiment of the invention.

## DESCRIPTION OF THE FIGURES

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

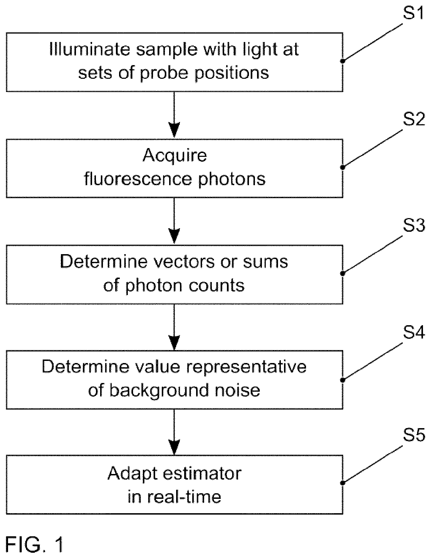

**Fig. 1** schematically illustrates a method according to the invention for adapting an estimator for use in a microscope for estimating a position of an emitter in a sample. In this method, the sample is illuminated S1 with light at one or more sets of probe positions and fluorescence photons are acquired S2 for the sets of probe positions. Advantageously, the sets of probe positions are illuminated S1 multiple times. Opposing probe positions of a set of probe positions may be illuminated S1 in sequential pairs. The set of probe positions comprises six or more probe positions, which are arranged rotationally symmetric on a circle without a central probe position. From the acquired S2 photons, vectors of photon counts or sums of photon counts are determined for the sets of probe positions. Subsequently, a value representative of background noise is determined S3 from the vectors of photon counts or the sums of photon counts. For example, the sums of photon counts may be added to a histogram, which preferably is specific for each of a plurality of scanning iterations. The value representative of background noise can then be derived from a peak of a histogram. The value representative of background noise is used for adapting S4 the estimator in real-time. For example, the estimator may be adapted S4 in such way that an expectancy value of the background noise is subtracted from photon counts before estimating the position of the emitter. Preferably, the estimator uses a calibration polynomial, which is specific for each scanning iteration. Advantageously, for determining a value representative of background noise only sets of probe positions are evaluated, for which no fluorescence from an emitter is detected. For determining whether fluorescence from an emitter is detected, the sum of photon counts for a set of probe positions may be compared with a threshold derived from a current estimated background.

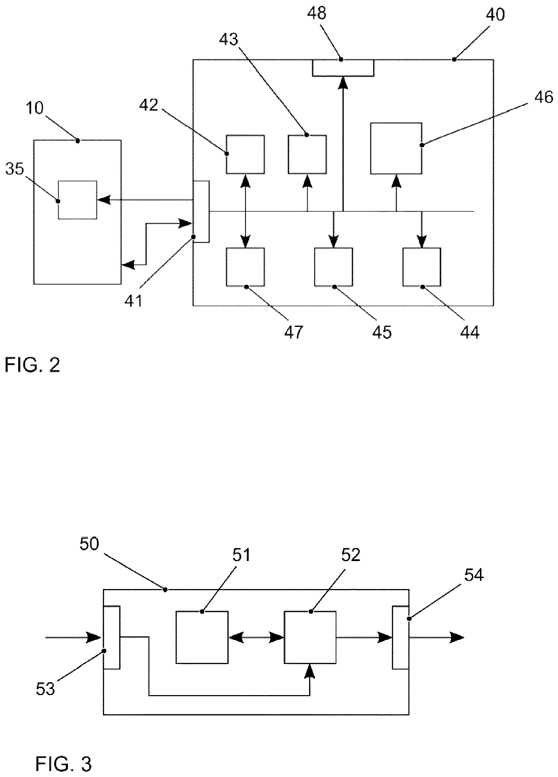

**Fig. 2** schematically illustrates a block diagram of a first embodiment of an apparatus 40 according to the invention for adapting an estimator 35 for use in a microscope 10 for estimating a position of an emitter in a sample. The apparatus 40 has an interface 41 for exchanging data with components of the microscope 10. An illumination means 42 is configured to illuminate the sample with light at one or more sets of probe positions, e.g., by instructing a light source and position control elements of the microscope accordingly. Advantageously, the sets of probe positions are illuminated S1 multiple times. Opposing probe positions of a set of probe positions may be illuminated S1 in sequential pairs. The set of probe positions comprises six or more probe positions, which are arranged rotationally symmetric on a circle without a central probe position. An acquisition means 43 is configured to acquire fluorescence photons for the sets of probe positions, e.g., by evaluating signals of one or more detectors of the microscope. A processing means 44 is configured to determine vectors of photon counts or sums of photon counts for the sets of probe positions from the acquired photons, and to determine a value representative of background noise from the vectors of photon counts or the sums of photon counts. For example, the sums of photon counts may be added to a histogram, which preferably is specific for each of a plurality of scanning iterations. A control means 45 is configured to adapt the estimator 35 in real-time using the value representative of background noise. For example, the estimator may be adapted in such way that an expectancy value of the background noise is subtracted from photon counts before estimating the position of the emitter. Preferably, the estimator uses a calibration polynomial, which is specific for each scanning iteration. Advantageously, for determining a value representative of background noise only sets of probe positions are evaluated, for which no fluorescence from an emitter is detected. For determining whether fluorescence from an emitter is detected, the sum of photon counts for a set of probe positions may be compared with a threshold derived from a current estimated background.

The illumination means 42, the acquisition means 43, the processing means 44, and the control means 45 may be controlled by a controller 46. A local storage unit 47 is provided, e.g., for storing data during processing. A user interface 48 may be provided for enabling a user to modify settings of the various elements 42-46 of the apparatus 40. The different elements 42-46 of the apparatus 40 can be embodied as dedicated hardware units. Of course, they may likewise be fully or partially combined into a single unit or implemented as software running on a processor, e.g., a CPU or a GPU.

A block diagram of a second embodiment of an apparatus 50 according to the invention for adapting an estimator for use in a microscope for estimating a position of an emitter in a sample is illustrated in **Fig. 3.** The apparatus 50 comprises a processing device 51 and a memory device 52. For example, the apparatus 50 may be a computer, an electronic control unit or an embedded system. The memory device 52 has stored instructions that, when executed by the processing device 51, cause the apparatus 50 to perform steps according to one of the described methods. The instructions stored in the memory device 52 thus tangibly embody a program of instructions executable by the processing device 51 to perform program steps as described herein according to the present principles. The apparatus 50 has an input 53 for receiving data. Data generated by the processing device 51 are made available via an output 54. In addition, such data may be stored in the memory device 52. The input 53 and the output 54 may be combined into a single bidirectional interface.

The processing device 51 as used herein may include one or more processing units, such as microprocessors, digital signal processors, or a combination thereof.

The local storage unit 47 and the memory device 52 may include volatile and/or non-volatile memory regions and storage devices such as hard disk drives, optical drives, and/or solid-state memories.

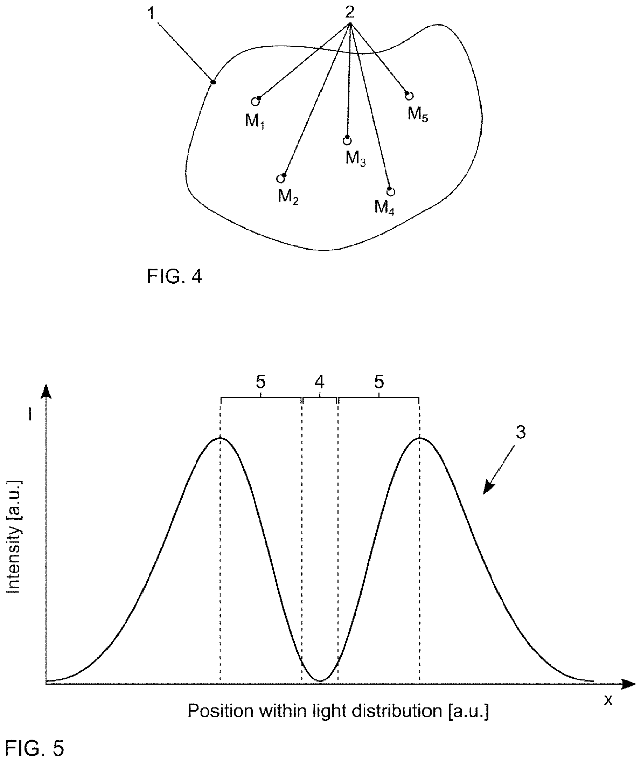

In the following, aspects of the invention shall be explained in more detail with reference to Fig. 4 to Fig. 10.

Fig. 4 shows a sample 1 with a number of emitters 2, e.g., molecules marked with fluorophores or acting as fluorophores themselves. In this example, five emitters 2 are shown, whose positions $M_1$ to Ms are to be determined. The fluorophores can be excited with light of a suitable wavelength to emit photons. In MINFLUX microscopy, the fluorophores are excited in such a way that a fluorophore to be localized is always placed close to or in a minimum of a light distribution used for excitation, whereby the light distribution must have an intensity increase range adjacent to the minimum. In this way a better utilization of the fluorescence photons is achieved with regard to obtaining information about the position of the respective emitting fluorophore. Ideally, the minimum of the excitation light distribution is a zero point.

Fig. 5 shows an exemplary intensity curve over a cross-section through a light distribution 3 of a suitable structured optical beam, in this case a donut. The intensity I is plotted against the position within the light distribution 3, here along the x-axis. The intensity curve of the light distribution 3 shows a central intensity minimum 4, which is surrounded on all sides by intensity increase areas 5.

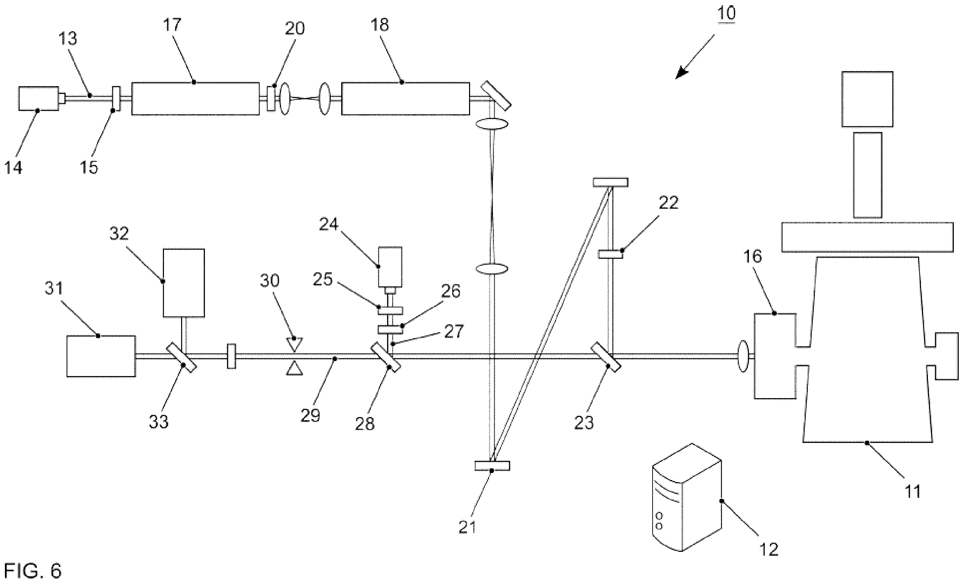

**Fig. 6** shows an exemplary optical setup of a MINFLUX microscope 10. The optical setup is based on a common fluorescence microscope. Typical microscopy workflows also entail prior steps before a nanometer resolution image is recorded, in particular the selection of regions of interest based on eyepiece inspection of a sample in the widefield mode or by confocal scanning. Realizing MINFLUX on top of a standard inverted microscope platform 11 facilitates the combination of practicability with ultimate resolution, as a common fluorescence microscope provides routinely needed features such as compatibility with standard stages, probe holders, bright field and epi-fluorescence illumination with employable filters and eyepieces for quickly checking large regions of interest in the sample. The MINFLUX microscope 10 is controlled by controller 12.

An excitation beam 13 emitted by a laser 14 is focused into the focal plane of an objective lens, which is part of the microscope platform 11. In order to allow both flexible pre-views of large regions of interest and precise measurements in desired regions applying the MINFLUX scheme, beam scanning with respect to the stationary sample is achieved by a galvanometer scanning unit 16 and electro-optical beam deflectors 17, 18 operating in concert. To enable lateral fast scanning for MINFLUX measurements in the x-y-plane, the excitation beam 13 passes through a λ/2-plate 15 and is deflected by two electro-optical beam deflectors 17, 18, which are installed in series and rotated by 90° relative to their respective axes. A λ/2-plate 20 in between the electro-optical beam deflectors 17, 18 rotates the laser beam polarization by 90° to accommodate for that rotation. The accessible field of view of the deflector array in the focal plane is small and is extended via an additional galvanometer scanning unit 16 installed at the camera port of the microscope body, which serves as the coarser basis for additional finer and much faster electro-optic x- and y-displacements. To switch between a Gaussian shape of the excitation beam 13 and a donut shape, a phase-modulating spatial light modulator 21 is used, which introduces a helical phase shift onto the beam 13. Following that, a λ/4-plate 22 shapes a circular polarization of the excitation light. Subsequently, the excitation beam 13 is superimposed with the detection beam path with a beam splitter 23 and steered into the microscope 11 via the galvanometer scanning unit 16. Jointly, both the galvanometer scanning unit 16 and the electro-optical beam deflectors 17, 18 are used to position the excitation beam 13 in the microscope 11, either as a normally focused beam for confocal scanning, or as a donut with a central zero-point intensity for the MINFLUX protocol.

For activation of single fluorophores, an activation laser 24 is used. The intensity of this laser 24 is reduced into the nanowatts region by a neutral-density filter 25. After passing through a λ/4 plate 26, the activation laser beam 27 is superimposed with the detection laser beam path as well as the excitation laser beam path by means of a beam splitter 28. The activation laser beam 27 is provided to the microscope 11 without passing the electro-optical beam deflectors 17, 18.

Fluorescence light 29 emitted by the sample is collected by the objective lens, descanned by the galvanometer scanning unit 16, transmitted by the aforementioned beam splitters 23, 28 and passed to a variable pinhole 30 for confocalized detection using two avalanche photodiodes 31, 32, which detect photons in distinct spectral ranges defined by a dichroic mirror 33.

In order to estimate positions of the emitters in the sample, the controller 12 comprises an estimator 35. The estimator 35 can be adapted in real-time by an apparatus 40 according to the invention for adapting the estimator 35. In this example, the apparatus 40 is also included in the controller 12. Of course, it may likewise be provided as a self-contained apparatus.

As indicated before, one possible modality for superresolving imaging is to use iterative MINFLUX imaging with power ramping. This approach derives the position of an emitter in a sample from the photon counts measured at a set of probe positions by applying a stochastic estimator to the data. In order to arrive at an unbiased result, i.e., a result without a systematic error, a measuring scheme is used, which offers virtually unbiased localization in real-time.

For a targeted coordinate pattern with $m$ beam positions $\vec{b}_j$ ($j$ = 1 ...$m$) on a circle with radius $L$ and associated photon counts $p_j$ collected during equal dwell times, an estimator for the (relative) emitter position $\vec{u}$ within the targeted coordinate pattern can be written as the product

$$\vec{r}(p_j) = c(L, w) \cdot \vec{u}(p_j, \vec{b}_j) \qquad (2)$$

of a normalized vector sum

$$\vec{u}(p_j, \vec{b}_j) = \frac{\sum_{j=1}^{m} p_j \cdot \vec{b}_j}{\sum_{j=1}^{m} p_j} \qquad (3)$$

with a scaling constant $c$ that accounts for $L$ and the full-width-half-maximum (FWHM) w of the point spread function. According to one aspect of the present invention, the scaling constant $c$ is replaced with an iteration dependent calibration polynomial $P_k$ of second degree, which is inexpensive to compute on the microscope hardware, to obtain an unbiased emitter position from the calibrated estimator:

$$\vec{r}(\vec{u}) = \vec{u} \cdot P_k(|\vec{u}|^2) \qquad (4)$$

For each iteration $k$, optimized coefficients for $P_k$ may be obtained by a Monte Carlo simulation that accounts for the known experimental parameters such as the precise shape of the donut, the geometry of the targeted coordinate pattern and the photon limit $N_k$. Preferably, the microscope probes at the targeted coordinate pattern multiple times during each localization step until the actual number of collected photons surpassed the preset $N_k$. The dwell times and the excitation powers may be adjusted such that the distribution of the actual number of collected photons stays close enough to this limit to warrant the use of $P_k$. For $m$ = 3 off-center beam positions as used in previous MINFLUX implementations, the estimator bias significantly deviates from radial symmetry. Therefore, m is increased to 6 for all iterations. An exception may be made for iterations where the aim are highest localization rates and the added overhead should be avoided. The increased angular uniformity of the localization precision becomes noteworthy in particular for emitters that reside at the periphery of the targeted coordinate pattern.

In providing the unbiased emitter position, equation (4) does not, however, account for the inevitable background that is present in typical applications. A uniform background would introduce a bias towards the center of the targeted coordinate pattern, as its mean contribution to the numerator of $u$ would amount to 0, while the denominator would now overestimate the number of photons that came from the localized emitter. Based on this notion, a MINFLUX control logic with a real-time background estimation algorithm is used to mitigate sufficiently homogeneous, quasi-static background.

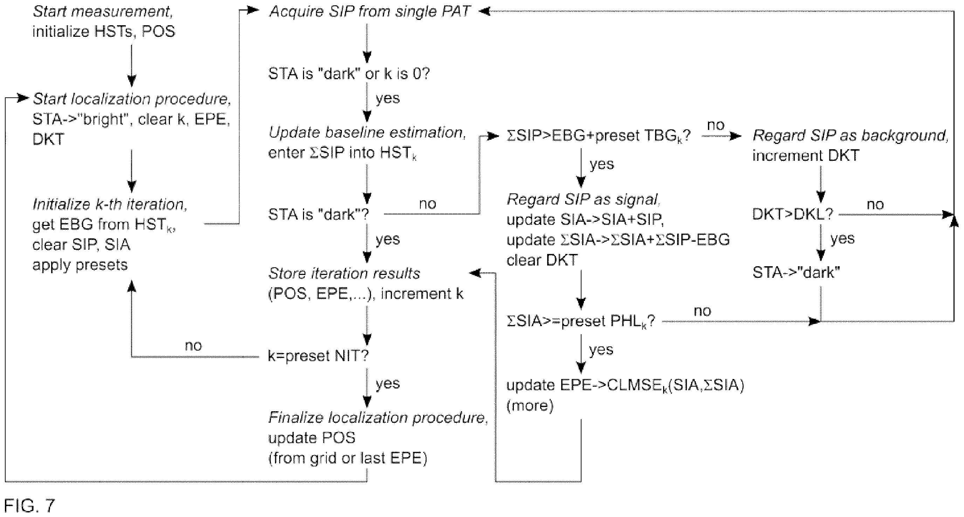

The implementation of the algorithm is depicted in **Fig. 7**. The current fluorescence baseline per iteration is deduced from a running histogram of detected fluorescence intensity during localization. Variables with index $k$ are iteration specific, where $k$ is the current iteration, starting at 0. NIT indicates the number of iterations in the MINFLUX sequence. $TCP_k$ refers to the targeted coordinate pattern, i.e., the relative coordinates of the probe positions. EPE is the emitter position estimate relative to POS, i.e., the measurement position in the sample, which is the origin of the TCP. POS is also the starting emitter position estimate. SIP refers to the last signal from pattern, which is a vector of photon counts. ΣSIP is the total photon count of the last signal. SIA refers to the accumulated SIPs over the current iteration. Accordingly, ΣSIA is the total photon count of the current iteration over the estimated background. $PHL_k$ is a photon limit, $HST_k$ is the (running) histogram of acquired ΣSIPs. DKT refers to a dark time counter, DKL to a dark time limit. EBG is the estimated background count of a single pattern in the current iteration. $TBG_k$ refers to a background threshold. STA is the status of the measurement. If the status is "bright", the algorithm is trying to localize an emitter. If the status is "dark", the algorithm is estimating background. $CLMSE_k$ refers to the calibrated least mean square estimator.

The implementation uses a vector "signal from pattern" SIP=$(p_1,...,p_m)$ of photon counts that were acquired during a single probing of the targeted coordinate pattern as the smallest unit of data on which decisions are based. For a single SIP probing, every $\vec{b_j}$ needs to be addressed at least once. However, typically the targeted coordinate pattern is scanned multiple times during a single SIP acquisition to ensure that a time-fluctuating background signal is effectively probed at all $\vec{b_j}$, to mitigate a directional distortion that would occur if a short burst of background would concentrate into a subset of the $\vec{b_j}$. For the same reason, it is beneficial to choose the scan order such that opposing $\vec{b_j}$ are probed in sequential pairs.

To estimate the background, a histogram-type baseline estimation is used. For each MINFLUX iteration $k$,

$$\Sigma\text{SIP}=\sum_{j=1}^{m} p_j$$

record is kept of the number of photons that have been collected during each individual SIP by entering every measured ZSIP into an iteration specific, running histogram $HST_k$. A running histogram is a histogram that is built from a limited number of entries in a first-in-first-out manner. While a region of interest is scanned in search for fluorescing emitters, the microscope acquires 0-th iteration SIPs at different locations in the sample, until a fluorescent signal is detected. The imaging conditions, e.g., activation levels, etc., are chosen such that during this process, most of the non-background emitters are in their dark state. Therefore, most of the acquired SIPs in 0-th iteration contain background-only signal. For higher iterations $k > 0$, the corresponding histograms $HST_k$ are built from only those SIPs that were measured after the measurement status changed to "dark", i.e., no significant signal above background has been detected. Consequently, all histograms will, iteration specifically, develop a maximum at a value EBG of ΣSIP that is an estimate for the current, averaged background level.

During each MINFLUX iteration, one or more SIPs are acquired until enough photons are acquired to proceed with the localization. During this process, an emitter that is currently being localized, i.e., the current emitter, may emit fluorescence intermittently in (micro-)bursts, a property well known for fluorescent proteins, and may cease to emit at any time. To allow only those SIPs to contribute to the localization that have a high probability of carrying signal from the current emitter, it is determined whether an individual SIP contains significant signal over background by comparing ΣSIP to the sum of the current value EBG and a threshold $TBG_k$. If the answer is yes, SIP is added to a vector SIA that holds the accumulated, vectorial signal for this iteration, which later contributes to the numerator of equation (3). For the denominator of equation (3), ΣSIP is background corrected and then added to the accumulated total signal ΣSIA→Σ SIA+ΣSIP-EBG. If the answer is no, SIP is discarded, as the current emitter apparently entered a non-fluorescing dark state. A counter DKT measures the number of consecutive SIPs that fall under this case and is now incremented by one. If the counter DKT surpasses a preset dark-time-limit DKL, which determines the longest time to wait for the current emitter to re-emit, the measurement status is set to dark. In this state, the microscope skips localization and probes a single SIP in each subsequent iteration to fill the respective histogram $HST_k$. The measurement status will return to bright, i.e., it expects signal from a current emitter, during initialization of the next localization event.

While less well-behaved background structures may require additional effort, such as multiple instances of background estimation assigned to different areas of the region of interest, it is noteworthy that already this simple approach proves efficient for the imaging tasks at hand. As a beneficial side effect, imperfections of the focusing that raise the center intensity of the donut above zero are concomitantly mitigated, since they manifest as an additional background contribution that predominantly depends on average emitter brightness and the laser power applied.

The above-described approach of using the position of the absolute maximum of a histogram $HST_k$ as the value EBG is a computationally inexpensive choice. It requires the histogram bin size to be chosen wide enough to allow the maximum to be formed, while narrow enough to prevent quantization effects from distorting the estimate. In practice, a bin size that corresponds to 5%-15% of the expected single emitter intensity represents a working tradeoff. For a higher precision of the estimate and/or less dependence on measurement parameters, methods that are more complex can be applied. For example, the bin size may be chosen to be smaller than 1% of the expected single emitter intensity. In this case, peak-detection algorithms may be applied to derive the value EBG. For example, the value EBG may be derived as the highest peak or as the first peak from a copy of the histogram after smoothing it with a Gaussian kernel. As an alternative, the value EBG may be derived from the position of the peak that contains the most entries in total, instead of most entries per bin. Of course, other density estimation methods may be used in place of histograms.

With regard to the effect and determination of the threshold $TBG_k$, a simple situation with a histogram $HST_k$ built from SIPs that contain either background, or background plus signal from emitters of interest is assumed. The histogram $HST_k$ will exhibit two peaks, which are broadened due to Poisson noise of the detected signal and variation in emitter and background brightness. Under the measurement conditions stated above, the background peak will exhibit the global maximum and its position will be the value EBG. If the background peak is approximately symmetric and the threshold $TBG_k$ is set to zero, roughly half of pure-background SIPs measured would erroneously be treated as signal from a current emitter, i.e., would constitute false positives. If the threshold $TBG_k$ is chosen larger, more and more area of the emitter-peak will eventually fall below the threshold given by the value EBG+ $TBG_k$, and the corresponding portion of measured emitter-SIPs would be discarded. Typically, the threshold $TBG_k$ can be set to 10%-50% of the expected single emitter intensity during a measurement, decreasing with iteration index. The higher threshold during the initial iteration $k = 0$ prevents chasing background. Lower values of the threshold $TBG_k$ and, consequently, more false positives can be tolerated in higher iterations, since an emitter of interest has already been identified and the background compensation scheme mitigates the effect of false positive SIP classification with respect to mislocalization.

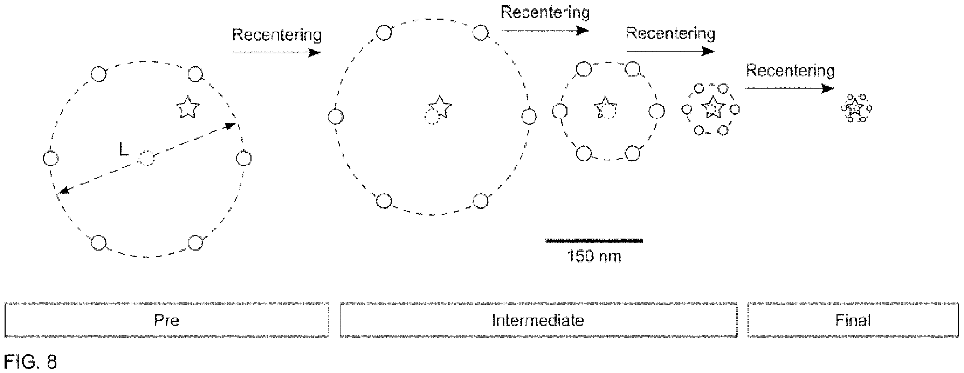

In practice, the usable field of view of a single MINFLUX localization step is usually limited to below half the wavelength of the excitation light that is used. To scan extended samples in a micrometer-sized region of interest, the microscope spans it with a hexagonal grid of scanning positions. The principle of MINFLUX localization is shown in **Fig. 8**. In the figure, the black empty circles indicate the targeted coordinate pattern applied for the iterations, i.e., the donut center positions (six probe positions arranged symmetrically on a circle (dashed line in Fig. 8) around the estimated emitter position. For the pre-localization step performed by pinhole orbit scanning, the black empty circles indicate the respective centers of the pinhole projections into the focal plane in the sample. The center position of the targeted coordinate pattern is also marked, though it is not used as a probe position. The star designates the position of the fluorophore. Following the pre-localization by pinhole orbit scanning, the iterative procedure proceeds with three intermediate subsequent iterations and one final iteration. After each iteration, the targeted coordinate pattern is recentered according to the prior emitter position estimate from a calibrated least-mean-squared estimation based on the registered photon counts. The procedure thus quickly zooms in on the emitter, shrinking the targeted coordinate pattern to smaller dimensions of $L$. A precision of ~2 nm is uniformly afforded. Subsequently emitted photons may be used to further refine the position estimate until the emitter ceases to fluoresce.

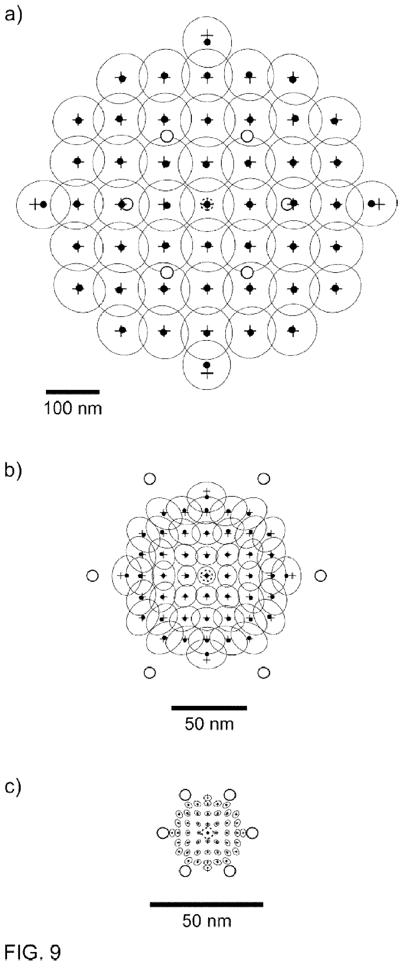

**Fig. 9** shows targeted coordinate patterns applied in the MINFLUX localization process, with simulated mean position estimates and confidence intervals. The black solid circles indicate the simulated mean position estimates. The ellipsoids indicate the confidence intervals for spaced out emitter positions, which are indicated as black crosses. Fig. 9a) shows a pre-localization, Fig. 9b) an intermediate localization, and Fig. 9c) the final localization. The mutual distance d between the scanning positions preferably is between 10% and 50% of the excitation wavelength $\lambda_{exc}$ that is used, i.e., $0.1 \cdot \lambda_{exc} \leq d \leq 0.5 \cdot \lambda_{exc}$ These positions are repeatedly probed during a measurement and serve as starting points for the activation, search and localization of fluorescent markers. Since the field of view of a single MINFLUX localization step is generally limited to an area of about the size of the diffraction limit or even less, according to one aspect of the invention a lower-precision but further-reaching localization mode is implemented, named pinhole orbit scanning, which improves the efficiency of the search process. Contrary to previous MINFLUX implementations, the pre-localization does not resort to a regularly focused beam. Instead, galvanometric and electro-optical scanners act in concert to keep the donut-shaped excitation beam stationary at a grid position, while the pinhole is sequentially projected to the points of a hexagonal targeted coordinate pattern, i.e., $m = 6$, without a probe position at its center and with a beam separation of about $L = 300$ nm. The position estimate is then obtained according to equation (4) as in the MINFLUX mode with matching $P_k$ for 40 photons in one or more steps. To prevent dark spots next to grid positions that potentially arise from the donut zero, the usable range for $d$ is preferably capped at about $\lambda_{exc}/2$. This arrangement provides a detection radius of about a full wavelength and significantly simplifies the setup, as it makes dedicated hardware for microsecond-scale switching between different focal intensity distributions, e.g., between a Gaussian shape and a donut shape, redundant.

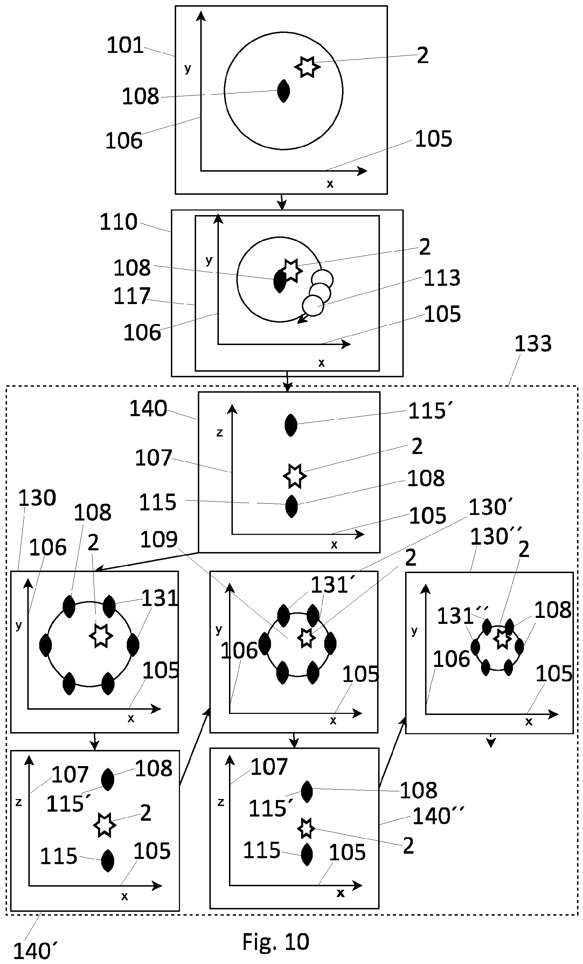

**Fig. 10** shows a procedure of an iterative MINFLUX localization in three dimensions according to an embodiment of the invention together with pre localization steps. The procedure begins with locating 101 of an emitter 2, particularly an excitable fluorophore. This can happen in different ways, e.g., by an excitation and observation in the wide field or by confocal scanning of the sample. Depending on the sample, activation light may be used for locating 101 in addition to the excitation light. If the sample is scanned with excitation light, a Gaussian excitation light distribution can be used to this end. Preferably, however, a 3D excitation donut 108 can be used. This is preferred, since this obviates the need for several light paths with fast switching. If an emitter 2 has been located, the position of the emitter is normally known with an uncertainty in the magnitude of the diffraction limit.

After the locating 101, a pre localization 110 is performed. This pre localization 110 may also be performed according to a method known from the prior art even when performing the method according to the invention. In the depicted embodiment, the pre localization 110 is carried out using a 3D excitation donut 108. With this 3D excitation donut 108, a lateral pre localization 110 is performed. Therein, the position of the emitter 2 in a first direction 105 and a second direction 106 is estimated from a position specific detection of the fluorescence emission in an image plane arranged confocally to the excitation focus, that is the point spread function in the image plane. Such a position specific detection can be carried out, e.g., using an array of photon counting avalanche diodes, i.e., with a SPAD array, or in that an image of a detection pinhole is scanned in the sample plane. Therein, the projection of the pinhole is moved on a circular trajectory around a center or is sequentially placed on at least six equally spaced positions on such a circular trajectory. Therein, the center is the center of an imaginary point light source which is positioned exactly at the center of the 3D excitation donut 108. The circular trajectory is marked in Fig. 10 as a pinhole orbit 113 by three small circles on a circumference of a circle and an arrow. Therein, the diameter of the smaller circles does not indicate the diameter of the pinhole. In contrast, the pinhole may be so large that the image of the pinhole in the sample comprises the center of the excitation donut 108 at all times. The diameter of the pinhole orbit is advantageously chosen as large as possible, wherein the exact conditions may depend on the obtainable fluorescence signal, but also on the fluorescence background, but particularly will depend also on practical boundary conditions. E.g., the 3D excitation donut 108 may be deflected by an electrooptical scanner, to access the respective individual points of the scanning pattern 109, and lead by a galvo scanner used for scanning of the sample. Therein, the galvo scanner is also in the detection beam path, but the electrooptical scanner is not. Specifically, the scanning of the pinhole orbit 113 occurs while simultaneously fixing the position of excitation with the 3D excitation donut by sequentially placing the projection of the pinhole arranged in the detection beam path into the sample at the chosen positions of the pinhole orbit 113, wherein the electrooptical scanner induces a counter movement of the excitation light, such that the 3D excitation donut remains stationary in the sample. From this, a maximal extension of the pinhole orbit corresponding to the size of the scan field accessible solely by the electrooptical scanner results. Since during this kind of position determination, however it is concretely realized, the 3D excitation donut remains spatially fixed and therefore the emitter 2 is always exposed to the same excitation intensity during the localization, the shape of the intensity distribution of the 3D excitation donut does not immediately affect the quality of the lateral pre localization, but only indirectly due to different signal-to-background ratios dependent on the actual position of the emitter 2 relative to the center of the 3D excitation donut 108.

The locating 101 and the lateral pre localization 110 can also be combined in one step. E.g., it is possible to move the 3D excitation donut 108 to a position in the sample and detect fluorescence in the above-described manner. Dependent on the signal, particularly dependent upon whether or how much fluorescence is detected, it can be determined whether an emitter 2 is present in the focus area of the 3D excitation donut 108 or not. From the measured values obtained thereby, a position of the emitter 2 within the focus area can also be obtained immediately. If no fluorescence or only a low signal is detected, another position, e.g., a neighboring location can be headed to, at which the described measurement is repeated.

An iterative real time MINFLUX localization 133 may even performed if during locating 101 or lateral pre localization 117 or even during a later localization step, several emitters 2 are present in the focus area of the 3D excitation donut 108 and contribute to the signal. In this case, in the respective step, none of the emitters 2 is localized with the best possible accuracy, but a kind of average position is obtained, but in subsequent steps, one of two favorable situations occurs with a certain probability: In one case, the several emitters 2 are so close together that they are not separated during the entire iterative real time MINFLUX localization 133, this is they are positioned together within the area of the scanning pattern 109, in which a MINFLUX localization may occur with the given scanning pattern 109. In this case, the iterative real time MINFLUX localization yields an average position of the emitters 2. Such a case particularly occurs if the distance of the contributing emitters 2 is small compared to the size of the resolvable biological structures. In all other cases, the several emitters 2 are further apart. In this case, during the size reduction of the scanning pattern 109 emitters 2 positioned further outside reach an area, in which the intensity of the excitation light or the amount of excitation light actually impinging on them is very high. In case of the emitters 2 being switchable fluorophores, as commonly used, this results in the emitters 2 reaching a dark state, such that they subsequently do not longer contribute to the fluorescence signal, so that finally only a single emitter 2 or closely spaced emitters 2 are localized.

After the lateral pre localization 117, an axial pre localization may follow. However, the method depicted in Fig. 10 assumes that the axial position of the emitter 2 is known with sufficient accuracy to perform a MINFLUX localization already without an axial pre localization. This may be, e.g., if the sample to be examined is thin or if emitters 2 are located during locating 101 which have been activated by activation light, particularly short wavelength activation light, during locating 101, or in case of an activation by thin light sheets irradiated from the side. In this case, an iterative real time MINFLUX localization 133 may immediately follow the lateral pre localization 117. In contrast to the methods known from the prior art, according to this embodiment of the iterative real time MINFLUX localization 133 of the invention, a MINFLUX localization is performed using an intensity profile with a local central intensity minimum surrounded in all three directions by intensity increase areas, here specifically a 3D excitation donut 108, wherein nevertheless a lateral MINFLUX localization 130,130',130" is performed separately from an axial MINFLUX localization 140,140',140" in the axial direction 107, that is successively in a temporal sequence. Therein, according to the invention, if an axial MINFLUX localization 140,140',140" is the next step, the information obtained in a lateral MINFLUX localization 130,130',130" is utilized to place the axial probe positions, that is the positions 115,115', optimally in respect of the use of the information contained in the fluorescence photons to be detected in this next step. Conversely, if a lateral MINFLUX localization 130,130',130" is the next step, the information obtained in an axial MINFLUX localization 140,140',140" is utilized to place the lateral probe positions 131, particularly the center of the scanning pattern 109, optimally in respect of the use of the information contained in the fluorescence photons to be detected in this next step.

In the embodiment shown in Fig. 10, for a first axial MINFLUX localization 140, a 3D excitation donut 108, which is advantageously identical to the 3D excitation donut 108 used in the lateral pre localization 117, is placed at two positions 115,115', which are arranged along a perpendicular line with respect to the focal plane of the lateral pre localization 117, one position being below and the other above the focal plane. Therein, the arrangement of the perpendicular line in the first direction 105 and the second direction 106 corresponds to the position of the emitter 2 determined in the lateral pre localization 117, which normally does not exactly correspond to the actual lateral position of the emitter 2. Therein the axial distance is chosen such that an axial position of the emitter 2 can be determined from the fluorescence values measured for both positions 115,115'. A respective step is known from the prior art. To this end, the lower position 115 is chosen such that it is arranged with sufficient certainty, e.g., with a probability of about 90 % or more, below the actual position of the emitter 2, and respectively the upper position 115' is above this axial position. The maximum mutual distance between the positions 115,115' suitable for a MINFLUX localization results from the fact that the emitter 2 is ideally respectively close to the central minimum of the 3D excitation donut 108, and at least should not be exposed to an area of the 3D excitation donut 108 having maximum intensity or an area, which is further away from the central minimum than a first local axial maximum of the 3D excitation donut 108. From the photon counts or intensities measured at the positions 115,115' an axial position of the emitter 2 is determined. Subsequently, a lateral MINFLUX localization 130 is performed. To this end, the 3D excitation donut 108 is placed in a plane perpendicular to the optical axis at six lateral probe positions 131 regularly spaced on a circle, the center of which corresponds to the position of the emitter 2 determined during the lateral pre localization 117. The plane of the lateral probe positions is arranged such that their axial position corresponds to the position of the emitter 2 determined in the axial MINFLUX localization 140. Thereby, it is ensured that the lateral intensity profile of the 3D excitation donut 108 comprises a local intensity minimum which is as pronounced as possible and is well suitable for a lateral MINFLUX localization 130. The scanning pattern used in this step does not contain probe positions outside of the plane of the lateral probe positions 131. According to the depicted embodiment, a further axial MINFLUX localization 140', which is performed corresponding to the first axial MINFLUX localization 140, follows after this lateral MINFLUX localization 130; the axial positions 115,115', at which the 3D excitation donut 108 is placed during this axial MINFLUX localization 140', are chosen such that the center between the two positions 115,115' in the axial direction corresponds to the axial position of the emitter 2 obtained during the earlier axial MINFLUX localization 140, and such that their lateral position corresponds to the position of the emitter 2 determined in the preceding lateral MINFLUX localization 130.

In the depicted embodiment, a further lateral MINFLUX localization 130', a further axial MINFLUX localization 140", and a final lateral MINFLUX localization 130" follow respectively. All localizations are performed in real time according to the MINFLUX principle using a suitable estimator. As described in the prior art, a final localization, obtained within a final data analysis, may follow and will follow the iterative real time MINFLUX localization 133 in many cases. This is not depicted in Fig. 10.

The separation of the MINFLUX localization in three directions in space in axial MINFLUX localizations 140,140',140" and lateral MINFLUX localizations 130,130',130" offers the possibility to iteratively perform, e.g., two axial MINFLUX localizations concurrently. E.g., it may be advantageous to perform a second axial MINFLUX localization 140' after the first axial MINFLUX localization 140, wherein between the two axial MINFLUX localizations 140,140' only the distance between the respective positions 115,115' or the axial position of the center between the two positions 115,115', but not the lateral arrangement of these positions 115,115' is changed. This may be advantageous since for a typical 3D excitation donut a radial intensity profile strongly depends on the axial position of the radial cross-section, while an axial intensity profile depends less on the radial position. That means that in respect of the use of the information contained in the fluorescence photons, it may be advantageous to first determine the axial position with low uncertainty, before a lateral MINFLUX localization 130 is performed. The fact that normally an iterative position determination is also advantageous in a position determination in only one direction, has been demonstrated in the publications of the prior art.

Normally, according to the iterative MINFLUX method 133 according to the invention, every single localization is based on a measurement of probe positions, which are arranged around the previously estimated position of the emitter 2, wherein the scanning pattern specifically does not contain probe positions at the position of the emitter 2. This has the reason that in general, according to the findings of the inventors, a real time localization without a measurement at the center of the scanning pattern performs better than with a method according to the scientific publications cited as prior art. In view of the method according to the invention described herein, this facilitates the possibility to separate the MINFLUX localization in an axial and a lateral MINFLUX localization, since the measurement at the center is not needed for calibrating a total localization performed in real time. However, this does not exclude that also while performing the method according to the invention, an additional measurement at a central position is performed. Such a measurement can be performed for control purposes, particularly in view of a check of the background signal, e.g., an estimation of the amount of the background signal, or in view of a detection whether one or several fluorophores are positioned in the catch range. Normally, the determination of the position of the emitter 2 will not immediately depend on this measurement value at the center.

**References**

[1] S.W. Hell: "Far-Field Optical Nanoscopy", Science 316, 1153-1158 (2007).

[2] S.W. Hell et al.: "Breaking the diffraction resolution limit by stimulated emission: stimulated-emission-depletion fluorescence microscopy", Optics Letters 19, 780-782 (1994).

[3] S.W. Hell: "Toward fluorescence nanoscopy". Nat Biotech 21, 1347-1355 (2003).

[4] E. Betzig et al.: "Imaging Intracellular Fluorescent Proteins at Nanometer Resolution", Science 313, 1642-1645 (2006).

[5] A. Sharonov et al: "Wide-field subdiffraction imaging by accumulated binding of diffusing probes", Proceedings of the National Academy of Sciences 103, 18911-18916 (2006).

[6] F. Balzarotti et al.: "Nanometer resolution imaging and tracking of fluorescent molecules with minimal photon fluxes", Science 355, 606-612 (2017).

[7] K.C. Gwosch et al.: "MINFLUX nanoscopy delivers 3D multicolor nanometer resolution in cells", Nature Methods 17, 217-224 (2020).

[8] Y. Eilers et al.: "MINFLUX monitors rapid molecular jumps with superior spatiotemporal resolution", Proceedings of the National Academy of Sciences 115, 6117-6122 (2018).

[9] F. Balzarotti et. al., "Nanometer resolution imaging and tracking of fluorescent molecules with minimal photon fluxes", https://arxiv.org/abs/1611.03401

## LIST OF REFERENCE SIGNS

| 1 | Sample |
|---|---|
| 2 | Emitter |
| 3 | Light distribution |
| 4 | Minimum |
| 5 | Intensity increase area |
| 10 | Microscope |
| 11 | Microscope platform |
| 12 | Controller |
| 13 | Excitation beam |
| 14 | Laser |
| 15 | $\lambda$/2-plate |
| 16 | Galvanometer scanning unit |
| 17 | Electro-optical beam deflector |
| 18 | Electro-optical beam deflector |
| 20 | $\lambda$/2-plate |
| 21 | Spatial light modulator |
| 22 | $\lambda$/4-plate |
| 23 | Beam splitter |
| 24 | Activation laser |
| 25 | Neutral-density filter |
| 26 | $\lambda$/4-plate |
| 27 | Activation beam |
| 28 | Beam splitter |

| 29 | Fluorescence light |
|---|---|
| 30 | Variable pinhole |
| 31 | Avalanche photodiode |
| 32 | Avalanche photodiode |
| 33 | Dichroic mirror |
| 35 | Estimator |
| 40 | Apparatus |
| 41 | Interface |
| 42 | Illumination means |
| 43 | Acquisition means |
| 44 | Processing means |
| 45 | Control means |
| 46 | Controller |
| 47 | Local storage unit |
| 48 | User interface |
| 50 | Apparatus |
| 51 | Processing device |
| 52 | Memory device |
| 53 | Input |
| 54 | Output |
| 101 | Locating |
| 105 | First direction |
| 106 | Second direction |
| 107 | Axial direction |
| 108 | 3D excitation donut |
| 109 | Scanning pattern |
| 110 | Pre localization |
| 113 | Pinhole orbit |
| 115 | Axial probe position |
| 117 | Lateral pre localization |
| 130 | Lateral MINFLUX localization |
| 131 | Lateral probe position |
| 133 | Iterative realtime MINFLUX localization |
| 140 | Axial MINFLUX localization |
| EBG | Estimated Background |
| $HST_k$ | Histogram |
| $M_i$ | Emitter position |
| $P_i$ | Probe position |
| SIP | Vector of photon counts |
| $\Sigma SIP$ | Sum of photon counts |
| TCP | Set of probe positions |
| S1 | Illuminate sample with light at sets of probe positions |
| S2 | Acquire fluorescence photons |
| S3 | Determine vectors or sums of photon counts |
| S4 | Determine value representative of background noise |
| S5 | Adapt estimator in real-time |

**Claims**

1. A method for estimating a position of an emitter (2) in a sample (1) comprising

- illuminating the sample (1) with light at one or more sets of probe positions ($P_i$),
- acquiring photons, particularly fluorescence photons, for the sets of probe positions ($P_i$),
- determining vectors of photon counts or sums of photon counts for the sets of probe positions ($P_i$) from the acquired photons, and
- estimating the position of the emitter (2) from the vectors of photon counts or sums of photon counts,

**characterized in that**
the one or more sets of probe positions ($P_i$) each comprise six or more probe positions ($P_i$), which are arranged rotationally symmetric on a circle around a center, wherein the one or more sets of probe positions ($P_i$) lacks a central probe position ($P_i$).

2. The method according to claim 1, **characterized in that** the sample (1) is illuminated at the probe positions ($P_i$) with a light distribution (3) having an intensity increase range adjacent to a minimum (4).

3. The method according to claim 1 or 2, **characterized in that** opposing probe positions ($P_i$) of a set of probe positions ($P_i$) are illuminated in sequential pairs.

4. The method according to one of the preceding claims, **characterized in that** a plurality of scanning iterations is performed, wherein in each scanning iteration the sample (1) is illuminated with light at the one or more sets of probe positions ($P_i$), photons, particularly fluorescence photons, are acquired for the sets of probe positions ($P_i$), vectors of photon counts or sums of photon counts are determined for the sets of probe positions ($P_i$) from the acquired photons, and a position estimate of the emitter (2) is determined from the vectors of photon counts or sums of photon counts.

5. The method according to one of the preceding claims, **characterized in that** the method further comprises determining a value representative of background noise from the vectors of photon counts or the sums of photon counts, wherein particularly the value is determined in a plurality of the scanning iterations, more particularly in each of the scanning iterations.

6. The method according to claim 5, **characterized in that** the method further comprises adapting an estimator (35) in real-time using the value representative of background noise, wherein particularly the estimator (35) is adapted in a plurality of the scanning iterations, more particularly in each of the scanning iterations.

7. The method according to claim 6, **characterized in that** the estimator (35) is adapted in such a way that an expectancy value of the background noise is subtracted from photon counts before estimating the position of the emitter (2), wherein particularly the expectancy value of the background noise is subtracted from the photon counts in a plurality of the scanning iterations, more particularly in each of the scanning iterations.

8. The method according to claim 6 or 7, **characterized in that** the estimator (35) uses a calibration polynomial, wherein particularly the calibration polynomial is specific for each of the plurality of scanning iterations.

9. The method according to one of the claims 5 to 8, **characterized in that** the estimator, $\vec{r}(p_j)$, is determined by a

$$\vec{u}\left(p_j, \vec{b}_j\right) = \frac{\sum_{j=1}^{m} p_j \cdot \vec{b}_j}{\sum_{j=1}^{m} p_j}$$

product $\vec{r}(p_j) = c \cdot \vec{u}(p_j, \vec{b}_j)$ of a vector sum and a scaling constant or calibration polynomial, $c$, wherein $\vec{b}_j$ ($j = 1 \dots m$) are the probe positions and $p_j$ are the associated photon counts, wherein particularly the scaling constant, $c$, depends on a radius, $L$, of the circle, on which the probe positions are arranged, and the scaling constant, $c$, depends on a full-width-at-half-maximum of a detection point spread function.

10. The method according to one of the preceding claims, **characterized in that** the method comprises a pre-localization step to search for an emitter (2) in a field of view and/or obtain an initial position estimate of the emitter (2), wherein the pre-localization step comprises illuminating the sample (1) with a stationary donut-shaped excitation beam, projecting a pinhole (30) sequentially to said probe positions ($P_i$), acquiring the photons for the probe positions ($P_i$), and estimating a position of the emitter (2) in the sample (1) from the acquired photons.

11. The method according to any one of the preceding claims, **characterized in that** the sample (1) is illuminated by a 3D donut (108) at the one or more sets of probe positions ($P_i$), wherein the method comprises an axial localization step (140) and a lateral localization step (130), and wherein

- in the axial localization step (140), a central local minimum of the 3D donut (108) is sequentially positioned at two axial probe positions (115, 115') on a scanning pattern axis running through an estimated position of the emitter (2), wherein the pair of probe positions (115, 115') encloses the estimated position, wherein in the axial localization step (140) emitted photons, particularly fluorescence photons, are acquired from the emitter (2) for each of the axial probe positions (115, 115'), particularly wherein the measured value is allocated to the respective axial probe position (115, 115'), and wherein in the axial localization step (140), a new estimation of the axial position of the emitter (2) is determined from the acquired photons, particularly from the measured values allocated to the respective axial probe positions (115, 115'), and wherein
- in the lateral localization step (130), the central local minimum is sequentially placed exclusively in a scanning pattern plane at six or more lateral probe positions (131), which are arranged rotationally symmetric on a circle around a center, wherein the lateral probe positions (131) lack a central probe position, wherein the scanning pattern plane is oriented perpendicular to the scanning pattern axis, and wherein the lateral probe positions (131) are arranged around an estimated position of the emitter (2) determined in one or more previous steps, wherein in the lateral localization step (130) emitted photons, particularly fluorescence photons, are acquired from the emitter (2) for each of the lateral probe positions (131), particularly wherein the measured value is allocated to the respective lateral probe position (131), and wherein in the lateral localization step (130), a new estimation of the lateral position of the emitter (2) is determined from the acquired photons, particularly from the measured values allocated to the respective lateral probe positions (131).

12. The method according to one of the claims 4 to 11, **characterized in that** the sample (1) is illuminated with light at an additional probe position at the center of the circle and photons are acquired, wherein a center-frequency-ratio is determined from the photons acquired from the one or more set of probe positions ($P_i$) and the additional probe position, and wherein in case the center-frequency-ratio is above a threshold in a scanning iteration, the measurement is aborted or the respective scanning iteration is repeated and the center-frequency-ratio is re-determined, wherein a first subset consisting of the last $n$ scanning iterations is repeated, wherein $n$ is given by the absolute value of a headstart parameter, wherein the center-frequency-ratio is determined only in a second subset of the scanning iterations, and wherein the headstart parameter is chosen such that the repeated second subset of the scanning iterations includes at least one scanning iteration, in which the center-frequency-ratio is determined.

13. An apparatus (40) for estimating a position of an emitter (2) in a sample (1), particularly by the method according to one of the claims 1 to 12, the apparatus (40) comprising

    - illumination means (42) configured to illuminate the sample (1) at one or more sets of probe positions ($P_i$), particularly with a light distribution (3) having an intensity increase range adjacent to a minimum (4), wherein the one or more sets of probe positions ($P_i$) each comprise six or more probe positions ($P_i$), which are arranged rotationally symmetric on a circle around a center, wherein the one or more sets of probe positions ($P_i$) lacks a central probe position;
    - acquisition means (43) configured to acquire photons, particularly fluorescence photons, for the sets of probe positions ($P_i$);
    - processing means (44) configured to determine vectors of photon counts or sums of photon counts for the sets of probe positions ($P_i$) from the acquired photons, wherein particularly the processing means (44) are configured to determine a value representative of background noise from the vectors of photon counts or the sums of photon counts; and
    - optionally control means (45) configured to adapt an estimator (35) in real-time using the value representative of background noise.

14. A microscope (10), **characterized in that** the microscope (10) comprises an apparatus (40) according to claim 13 and/or is configured to perform a method according to one of the claims 1 to 12.

15. A computer program comprising instructions, which, when executed by a computer, cause the apparatus (40) according to claim 13 or the microscope (10) according to claim 14 to perform a method according to one of the claims 1 to 12.

Illuminate sample with light at
sets of probe positions — S1

Acquire
fluorescence photons — S2

Determine vectors or sums
of photon counts — S3

Determine value representative
of background noise — S4

Adapt estimator
in real-time — S5

FIG. 1

FIG. 2

FIG. 3

FIG. 4

Position within light distribution [a.u.]

FIG. 5

FIG. 6

FIG. 7

FIG. 8

a)

100 nm

b)

50 nm

c)

50 nm

FIG. 9

Fig. 10

Europäisches
Patentamt

European
Patent Office

Office européen
des brevets

# EUROPEAN SEARCH REPORT

Application Number

EP 21 17 5703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHMIDT ROMAN ET AL: "MINFLUX nanometer-scale 3D imaging and microsecond-range tracking on a common fluorescence microscope", NATURE COMMUNICATIONS, vol. 12, no. 1, 1 January 2021 (2021-01-01), pages 1-12, XP055832558, DOI: 10.1038/s41467-021-21652-z | 1-8, 10-15 | INV. G02B21/00 G01N21/64 |
| A | * page 5; figures 2a, 2b, 1a, 1b * <br> * page 4, column 2, line 31 - line 32 * | 9 | |
| X,D | FRANCISCO BALZAROTTI ET AL: "Supplementary Materials for Nanometer resolution imaging and tracking of fluorescent molecules with minimal photon fluxes", SCIENCE, vol. 355, no. 6325, 22 December 2016 (2016-12-22), pages 606-612, XP055767212, US ISSN: 0036-8075, DOI: 10.1126/science.aak9913 * figure S1 * | 1 | |

TECHNICAL FIELDS SEARCHED (IPC)

G02B
G01N

The present search report has been drawn up for all claims

| Place of search | Date of completion of the search | Examiner |
|---|---|---|
| Munich | 28 October 2021 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102016119263 A1
- DE 102016119264 A1
- WO 2020128106 A1

### Non-patent literature cited in the description

- **S.W. HELL.** Far-Field Optical Nanoscopy. *Science,* 2007, vol. 316, 1153-1158
- **S.W. HELL et al.** Breaking the diffraction resolution limit by stimulated emission: stimulated-emission-depletion fluorescence microscopy. *Optics Letters,* 1994, vol. 19, 780-782
- **S.W. HELL.** Toward fluorescence nanoscopy. *Nat Biotech,* 2003, vol. 21, 1347-1355
- **E. BETZIG et al.** Imaging Intracellular Fluorescent Proteins at Nanometer Resolution. *Science,* 2006, vol. 313, 1642-1645
- **A. SHARONOV et al.** Wide-field subdiffraction imaging by accumulated binding of diffusing probes. *Proceedings of the National Academy of Sciences,* 2006, vol. 103, 18911-18916
- **F. BALZAROTTI et al.** Nanometer resolution imaging and tracking of fluorescent molecules with minimal photon fluxes. *Science,* 2017, vol. 355, 606-612
- **K.C. GWOSCH et al.** MINFLUX nanoscopy delivers 3D multicolor nanometer resolution in cells. *Nature Methods,* 2020, vol. 17, 217-224
- **Y. EILERS et al.** MINFLUX monitors rapid molecular jumps with superior spatiotemporal resolution. *Proceedings of the National Academy of Sciences,* 2018, vol. 115, 6117-6122
- **F. BALZAROTTI.** *Nanometer resolution imaging and tracking of fluorescent molecules with minimal photon fluxes, https://arxiv.org/abs/1611.03401*